# EUROPEAN PATENT APPLICATION

(11) **EP 3 263 523 A1**
(43) Date of publication of application: **03.01.2018**
(21) Application number: 16176420.4
(22) Date of filing: 27.06.2016
(51) Int. Cl.: C01C 1/18, C01B 21/28

(54) **MANUFACTURING PLANT FOR AMMONIUM NITRATE AND PROCESS FOR STARTING IT**

(71) Applicant: YARA International ASA, 0213 Oslo (NO)
(72) Inventor: ØIEN, Halvor, N-3943 Porsgrunn (NO); LAURENT, Bernard, 5170 Lustin (Profondeville) (BE)
(74) Representative: Onsagers AS

(57) **Abstract**

The present disclosure concerns a manufacturing plant for production of aqueous solutions of ammonium nitrate and a process for starting it up. Manufacturing plants for production of ammonium nitrate which comprise a nitric acid production line can contain a start-up water-tank which provides water circulating the system in the form of liquid water/water vapour to heat the gauzes in the ammonia oxidizer. Regular maintenance of any ammonium nitrate manufacturing plant is of course required and may involve shut-down of the production, but repeated shut-down and start-up could pose a risk concerning ammonium nitrite build-up and pH changes in the start-up water-tank. By introducing an acidic start-up water-tank, the risk of ammonium nitrite detonation is decreased or may be avoided because ammonium nitrite will not accumulate in an acidic start-up water-tank.

## Description

### Field of the disclosure

This disclosure relates to a manufacturing plant for production of aqueous solutions of ammonium nitrate and a process for starting it.

### Background

There are multiple uses of ammonium nitrate. For example, ammonium nitrate in the form of a salt or in the form of an aqueous solution can be used as a fertilizer. Ammonium nitrate is also the main component of an explosive called Ammonium Nitrate Fuel Oil (ANFO). It is an explosive mixture which is used widely in mining. Typically, ANFO is made of about 94% w/w ammonium nitrate and about 6% w/w fuel oil. Within such a product, the ammonium nitrate serves as the oxidizing agent for the fuel.

Traditionally, production of aqueous ammonium nitrate solutions has been achieved by reacting nitric acid with ammonia in an aqueous environment. For example, US4699773 discloses a process for the preparation of aqueous ammonium nitrate solutions by the reaction of nitric acid with ammonia in two stages at elevated temperature, in which the first stage is carried out at elevated pressure and the second stage is carried out at atmospheric pressure. The heat of neutralization released in the first stage is used to vaporize a portion of the reactor contents, the remaining heat of reaction being utilized to produce steam. The vapour leaving the first stage develops a pressure which controls the valve regulating the amount of heat recovered by steam generation.

More recently, WO2012155163 describes an improved process for producing an aqueous ammonium nitrate solution as illustrated in the figures therein. The process concerns production of nitric acid in a nitric acid production line and its subsequent reaction with ammonia to form the aqueous ammonium nitrate solution. The process in WO2012155163 is considered to be an "integrated" process since ammonia vapour and/or water vapour from the aqueous ammonium nitrate solution are fed into the nitric acid production line. During start-up of the process, an external heat source may be employed to heat a fluid loop to a suitable temperature approximating that employed in steady state operation of the process. Water may then be introduced into the system providing for circulation of water vapour through the ammonia oxidizer. When the required temperature is reached, oxygen and ammonia can be fed to the oxidizer in order to start the oxidation of ammonia.

### Summary

The present disclosure concerns a manufacturing plant for production of aqueous solutions of ammonium nitrate and a process for starting it up. Manufacturing plants for production of ammonium nitrate which comprise a nitric acid production line can contain a start-up water-tank which provides water circulating the system in the form of liquid water/water vapour to heat the gauzes in the ammonia oxidizer and to heat the production lines. Regular maintenance of any ammonium nitrate manufacturing plant is of course required and may involve shut-down of the production, but repeated shut-down and start-up could pose a risk concerning ammonium nitrite build-up and pH changes in the start-up water-tank. By introducing an acidic start-up water-tank, the risk of ammonium nitrite detonation is decreased or may be avoided because ammonium nitrite will not accumulate in an acidic start-up water-tank. Furthermore, any ammonia condensing in an acidic start-up water-tank containing nitric acid will form the desired product, ammonium nitrate, and eventually end up in the ammonium nitrate tank. According to a first embodiment, the present disclosure concerns a manufacturing plant for producing ammonium nitrate comprising:
a) an oxidizer with a catalyst able to oxidize ammonia to nitrogen oxide comprising a vapour inlet and an outlet;
b) a condenser fluidly connected to the outlet of the oxidizer;
c) a phase separator fluidly connected to the condenser; wherein the phase separator comprises a gas outlet and a liquid outlet;
d) an ammonium nitrate reaction chamber fluidly connected to the liquid outlet of the phase separator;
e) an evaporator fluidly connected to the ammonium nitrate reaction chamber;
f) an ammonium nitrate tank for containing an aqueous ammonium nitrate solution fluidly connected to the evaporator, wherein the ammonium nitrate tank comprises a vapour outlet fluidly connected to the vapour inlet of the oxidizer; and
g) a start-up water-tank for containing an acidic aqueous fluid fluidly connected to the evaporator, wherein the start-up water tank is connected to a source of an acidic aqueous fluid or to a source of a pH adjusting agent.

In one particular aspect, the start-up water-tank contains an acidic aqueous solution. The term "acidic aqueous solution" refers to the liquid form of the "acidic aqueous fluid". The "acidic aqueous fluid" may be a liquid state, a vaporised state or a any combination thereof.

In one particular aspect, the manufacturing plant further comprises a heat exchanger arranged downstream of the outlet of the oxidizer and upstream of the condenser. The heat exchanger is installed to cool the stream from the oxidizer prior to entering the condenser.

In one particular aspect, the start-up water-tank comprises an inlet directly connected to the outlet of the oxidizer, an outlet of the heat exchanger if present, an outlet of the condenser, the liquid outlet of the phase separator, or an outlet of the ammonium nitrate reaction chamber and the start-up water-tank comprises an outlet fluidly connected to an inlet to the evaporator.

In one particular aspect of the manufacturing plant an inlet to the start-up water-tank is directly connected to the outlet of the condenser and an outlet of the start-up water-tank is connected to an inlet to the ammonium nitrate reaction chamber

In one particular aspect, an inlet to the start-up water-tank is directly connected to the outlet of the condenser and the outlet of the start-up water-tank is connected to an inlet to the evaporator.

In one particular aspect, the manufacturing plant further comprises a pump arranged downstream of the start-up water-tank and upstream of the evaporator, wherein the pump is able to transport the acidic aqueous fluid from the start-up water-tank to the evaporator.

In one particular aspect, the start-up water-tank for containing an acidic aqueous fluid is configured to establish a circulation of acidic aqueous fluid through the evaporator, the ammonium nitrate tank and the oxidizer.

In one particular aspect, the manufacturing plant further comprises at least one production output valve upstream the acidic start-up water-tank and downstream the oxidizer, a heat-exchanger if present, the condenser or the phase separator, wherein the production output valve allows a fluid connection between the oxidizer, the heat-exchanger if present, the condenser or the phase separator and the acidic start-up water-tank when in open position and which prevents the fluid connection when in closed position.

In one particular aspect, the manufacturing plant comprises a start-up valve in the fluid connection between the start-up water-tank and the ammonium nitrate reaction chamber or the evaporator wherein the start-up valve allows a fluid connection between the start-up water-tank and the ammonium nitrate reaction chamber or the evaporator when in open position and which prevents the fluid connection when in closed position.

In one particular aspect, the oxidizer comprises a temperature sensor for measuring the temperature inside the oxidizer.

In one particular aspect, the pH of acidic aqueous fluid in the start-up water-tank is below 3.0 as measured at standard conditions.

In one particular aspect, the acidic aqueous solution in the start-up water-tank is nitric acid.

In one particular aspect, the start-up water-tank further comprises a pH sensor in contact with the acidic aqueous fluid.

According to a second embodiment, the present disclosure concerns a process for start-up of a manufacturing plant according to the first embodiment comprising the steps
a) pumping the acidic aqueous fluid from the start-up water-tank to the evaporator,
b) heating the acidic aqueous fluid in the evaporator to generate water vapour;
c) providing the water vapour to the ammonium nitrate tank;
d) feeding vapour from the ammonium nitrate tank to the oxidizer
e) feeding the output of the oxidizer directly or indirectly into the start-up water-tank,
f) continuing steps a) to e) until a preselected temperature in the oxidizer is reached.

In one particular aspect of the process, the manufacturing plant further comprises at least one production output valve upstream the start-up water-tank and downstream the oxidizer, a heat-exchanger if present, the condenser or the phase separator, wherein the pumping step a) is followed by opening of the production output valve whereby the output from the oxidizer, the heat-exchanger if present, the condenser or the phase separator is fed back into the start-up water-tank.

In one particular aspect of the process, the manufacturing plant further comprises at least one start-up valve in the fluid connection between the start-up water-tank and the ammonium nitrate reaction chamber or the evaporator, wherein the pumping step a) is subsequent to opening of the start-up valve which allows the acidic aqueous fluid to be fed from the start-up water-tank to the evaporator.

In one particular aspect, the process further comprises measuring the temperature in the oxidizer and closing of the production output valve after the preselected temperature in the oxidizer is reached.

In one particular aspect, the process further comprises closing of the start-up valve after the preselected temperature of the in the oxidizer is reached.

In one particular aspect, the preselected temperature is about the ignition temperature of the catalyst in the oxidizer.

In one particular aspect, the heating step b) provides the vapour fed to the oxidizer in step c) with a temperature above the dew point for steam in the oxidizer.

In one particular aspect, the process further comprises measuring the temperature in the oxidizer, preferably the temperature of the catalyst.

In one particular aspect, the vapour from the aqueous ammonium nitrate tank entering the oxidizer is substantially water vapour.

In one particular aspect, the vapour from the aqueous ammonium nitrate tank entering the oxidizer is substantially water vapour and ammonia.

In one particular aspect, the process further comprises measuring the pH of the acidic aqueous fluid in the start-up water-tank and adding a pH adjusting agent if the pH is above a preset value.

In one particular aspect, the acidic aqueous fluid in the start-up water-tank is nitric acid.

In one particular aspect, the preset value is 3.0 and the pH adjusting agent is nitric acid.

### Brief description of the figures:

Figure 1 discloses a prior art system according to WO2012155163.
Figure 2 discloses a system according to one embodiment of the present disclosure.
Figure 3 discloses a system according to another embodiment of the present disclosure.
Figure 4 discloses a system according to a further embodiment of the present disclosure.

### Detailed description

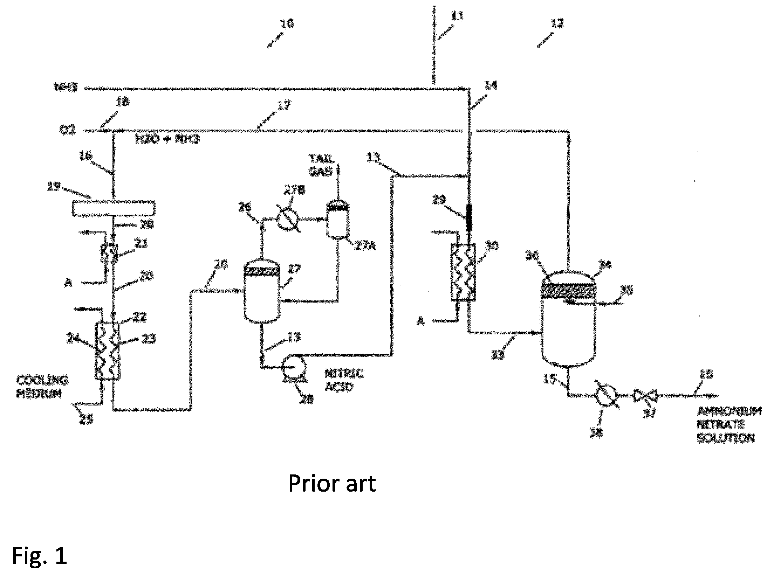

In order to start a manufacturing plant comprising a nitric acid production line as shown in Figure 1 and discussed in more detail below, gauzes in the ammonia oxidizer need to be heated to reach the ignition temperature. Such heating can be achieved in many ways. One way contributing to heating of the nitric acid production line in an integrated process for ammonium nitrate is by introduction of water which enters the nitric acid production line between a condenser and an ammonium nitrate reaction chamber. The water can then be heated and evaporated by an evaporator and circulate through the system, passing the gauzes in the ammonia oxidizer in the form of water vapour.

The water could come from a water-tank providing water during start-up of the integrated process for ammonium nitrate (not shown in Figure 1). However, if a start-up water-tank connected to an integrated process for ammonium nitrate initially contains pure water only, the pH of the solution inside the start-up water-tank would likely become alkaline over time. This is caused by excess of ammonia in the aqueous ammonium nitrate solution being drawn by heated water vapour during start-up and condensing in the start-up water-tank. Even without excess ammonia in the aqueous ammonium nitrate solution (e.g. if the ammonium nitrate solution is acidic), a condensate with pH 9 in the start-up water-tank may form. Alkaline conditions in the start-up water-tank could also be caused by any other source of ammonia condensing in the start-up water-tank. As used herein, "alkaline", means that the pH of a solution, measured by a conventional method at standard conditions, is higher than 7.0.

During start-up, the start-up water-tank in such a system receives water vapour and/or condensed water and potentially ammonia gas passing through an ammonia oxidizer. When the minimum temperature threshold of the ammonia oxidizer is reached and the gaseous feed entering the oxidizer comprises water vapour, ammonia and oxygen, the gauzes ignite and start the ammonia oxidation.

When ammonia is oxidized, NOx gases are formed as a result of the oxidation. Any NOx gas entering the start-up water-tank can also reduce the pH of the solution therein and may form ammonium nitrite if the water contains ammonia or is alkaline. This risk may be reduced by allowing the output from the oxidizer to by-pass the start-up water tank after the ammonia oxidizer has ignited and started normal operation. This can be achieved by commonly known techniques such as the use of a valve. However, if the valve fails by technical error, human error or otherwise, the NOx output may nevertheless reach such a start-up water-tank.

In this arrangement, there is a risk that the start-up water-tank could contain an aqueous solution wherein the pH is shifted from alkaline to acidic. In other words, the start-up water-tank starts off alkaline due to, for example, an excess of ammonia and then becomes acidic due to exposure to NOx gases. An acidic start-up water tank, in itself, is not a problem. However, as mentioned above, the NOx gases may also lead to the formation of ammonium nitrite if the water tank contains ammonia or is alkaline. Aqueous solutions of ammonium nitrite are especially sensitive for detonation at acidic pH. Thus, if a start-up water-tank contains an aqueous solution containing ammonium nitrite and the pH is decreased from alkaline to acidic, there is a risk of detonation. However, if the start-up water-tank is acidic throughout start-up, then ammonium nitrite will not accumulate and this risk of detonation may be reduced. The terms "acidic" and "acidic pH" as used herein, means that the pH of a solution, when measured by a conventional method at standard conditions, is lower than 7.0.

As used herein, an "acidic start-up water-tank" is a tank for containing an acidic aqueous solution. The acidic start-up water-tank receives water and a pH adjusting agent (e.g. an aqueous nitric acid solution) preferably from one or more external sources. The pH adjusting agent may in a preferred embodiment be a pH lowering agent. The acidic start-up water-tank is fluidly connected to the evaporator, either directly or indirectly. In general, a direct fluid connection is defined as being coupled without any further equipment, or only trivial equipment such as valves, pumps, filters, resins or the like being present between the fluid connection. In comparison, an indirect fluid connection means that another piece of major equipment, such as a heat exchanger, a condenser, a phase separator, an ammonium nitrate reaction chamber or the like is interposed between the fluid connection. Accordingly, when the start-up water tank is directly fluidly connected to the evaporator, then if anything is between the start-up water tank and the evaporator, it is only trivial equipment like valves, pumps, filters, resins or the like. Similarly, when the start-up water tank is indirectly fluidly connected to the evaporator, a major piece of equipment is between the start-up water tank and the evaporator, such as an ammonium nitrate reaction chamber. A start-up water-tank for containing an acidic aqueous fluid fluidly connected to the evaporator, can be connected to a source of an acidic aqueous fluid or to a source of a pH adjusting agent. The source may be an external source. Thus, the start-up water-tank can receive an already prepared acidic aqueous fluid and/or receive a pH adjusting agent which is able to adjust the pH of the fluid inside the start-up water-tank in situ.
The acidic start-up water-tank delivers an aqueous solution into an integrated process for ammonium nitrate during start-up of such process. As mentioned above, an "integrated process" involves ammonia vapour and/or water vapour from the aqueous ammonium nitrate solution being fed into the nitric acid line. Accordingly, the acidic start-up water-tank establishes a circulation of liquid water/vapour which heats the manufacturing system including the oxidizer. It is often desired during production of the aqueous ammonium nitrate solution itself (i.e. after "start-up") to prevent the acidic start-up water-tank from being fluidly connected to the evaporator and/or fluidly connected to the oxidizer, the heat-exchanger if present, the condenser, the phase separator and the ammonium nitrate reaction chamber. As used herein, production of an aqueous ammonium nitrate solution means that ammonia is oxidized and that the NOx output forms nitric acid which then reacts with ammonia to form aqueous ammonium nitrate solution. As used herein, "start-up" is the heating process of the manufacturing system in an integrated process for ammonium nitrate until the gauzes within the ammonia oxidizer starts oxidation of ammonia.

In more particular embodiments, the pH of the acidic aqueous solution in the start-up water-tank can be lower than 3.0, or more particularly lower than 2.0, or more particularly lower than 1.0. The pH of the acidic aqueous solution in the start-up water-tank can be in the range of -2.0 to 3.0, or more particularly in the range of -1.0 to 3.0, or more particularly in the range of 0.0 to 2.0. The initial temperature of the acidic aqueous solution in the start-up water-tank can be any ambient temperature, for example 20 to 70°C, or more particularly 30 to 60°C. However, the temperature of the acidic aqueous solution in the start-up water-tank will tend to increase during start-up, due to heated water vapour reaching the tank.

The acidic aqueous fluid in the start-up water-tank can be any aqueous solution made by dissolving suitable acids in water. In particular, the acidic aqueous fluid in the start-up water-tank can be diluted aqueous nitric acid, diluted aqueous sulfuric acid or diluted aqueous phosphoric acid. However, hydrochloric acid would typically be avoided to reduce corrosion of sensitive equipment. More particularly, the acidic aqueous solution in the start-up water-tank can be a diluted aqueous nitric acid. As used herein, the term nitric acid is meant to embrace HNO₃ and aqueous solutions thereof.

A manufacturing plant arranged to contain an integrated process for ammonium nitrate can operate in an approximately steady state wherein the nitric acid production output is influenced by the vapour from an aqueous ammonium nitrate solution. Such manufacturing plant will comprise at least one ammonia oxidizer, at least one phase separator, at least one ammonium nitrate reaction chamber wherein nitric acid can react with ammonia to form ammonium nitrate, at least one evaporator and at least one ammonium nitrate tank containing an ammonium nitrate solution.

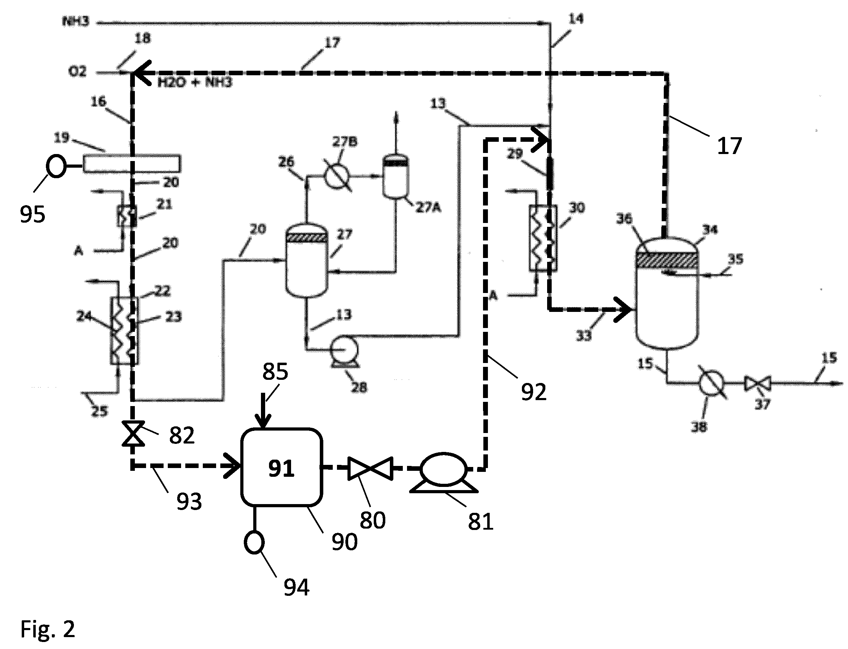

An integrated process for ammonium nitrate is a process comprising at least one nitric acid production line and at least one ammonium nitrate production line in which ammonia vapour and/or water vapour from an aqueous ammonium nitrate solution are fed into the nitric acid production line. Examples of such processes/systems can be seen in Figures 1 and 2 as discussed in more detail below.

The ammonia oxidizer may be any ammonia oxidizer known in the art for use in high temperature catalytic conversion of an ammonia/oxygen mixture. The catalyst located inside may be a cobalt oxide bed or any other ammonia oxidation catalyst known in the art, or more conventionally, may be a platinum-rhodium catalyst in the form of woven or knitted gauze layers. As used herein, "gauze" or "gauzes" is catalyst nets in the oxidizer able to oxidize ammonia to NOx. As used herein, "ignition" is the start of ammonia oxidation in the oxidizer. As used herein, "ignition temperature" is the lowest

temperature of the catalyst in the oxidizer able to start ammonia oxidation. The ignition temperature will depend on several parameters well known for persons skilled in the art of ammonia oxidation e.g. the composition and form of the catalyst material, the surface area of the catalyst, the composition of the gaseous feed, the flow and the pressure. US4863893 and US5256387 disclose various techniques concerning ignition. As used herein, "NOx output" means the gaseous mixture leaving the oxidizer during ammonia oxidation. This gaseous mixture comprises NO, but also several other nitrogen oxides like N₂O, NO₂ etc. During start-up, the output from the oxidizer is a gaseous mixture mainly comprising water vapour and potentially ammonia.

According to the present disclosure, a phase separator is often desired to separate the liquid phase from the vapour phase, in particular the aqueous nitric acid from the gaseous NOx. Such separators may be assisted by the employment of a demister device for assisting the disengagement of liquid droplets.

The reaction of the nitric acid and ammonia in the ammonium nitrate reaction chamber can be effected by any method known in the art, including, for example, by co-flowing the reactants adiabatically through a suitable length of pipe or duct. The reaction might alternatively be effected in a non-adiabatic (heat exchange) reactor, in which the (co-flowing) reactants will be heated or cooled by a heat transfer medium. As a further alternative, the reaction may be effected by mixing the ammonia and nitric acid in a vessel which may, as required, either be heated or cooled. The reactor may also to some degree function as an evaporator. The ammonium nitrate reaction chamber (illustrated in Figure 1 and Figure 2 as (29)), can in its simplest form comprise a length of adiabatic pipe or duct in which the liquid phase of the two-phase stream will be partially concentrated.

According to the present disclosure, at least one evaporator is fluidly connected to the ammonium nitrate reaction chamber and to the ammonium nitrate tank. During production, the evaporator heats the ammonium nitrate produced in the ammonium nitrate reaction chamber before it's provided to an ammonium nitrate tank. During start-up, the evaporator heats the acidic aqueous solution from the start-up water-tank to generate water vapour. The temperature of the water vapour can suitably, depending on the pressure, reach a value in the range of 110 to 150°C.

The ammonium nitrate tank containing an aqueous ammonium nitrate solution is fluidly connected to the ammonia oxidizer and vapour from the aqueous ammonium nitrate tank can be fed into the ammonia oxidizer. Depending on the pH of the aqueous ammonium nitrate solution, the vapour will comprise an amount of ammonia in addition to water vapour. If the pH is high, e.g. caused by excess of ammonia in the ammonium nitrate reaction chamber, the vapour from the aqueous ammonium nitrate solution will comprise a substantial amount of ammonia. If the pH is low, e.g. caused by excess of nitric acid in the ammonium nitrate reaction chamber, the vapour from the aqueous ammonium nitrate solution will comprise a only a very small amount of ammonia.

The nitric acid production line in a manufacturing plant according to the present disclosure will in some desired embodiments produce diluted nitric acid, depending on the concentration of water vapour in the reaction mixture entering the oxidizer. Diluted nitric acid will have a concentration lower than 50% w/w. One example of a suitable concentration of the produced diluted nitric acid is 20 to 40% w/w. As a consequence, the aqueous ammonium nitrate solution produced by the initial reaction of the diluted nitric acid and ammonia in a manufacturing plant according to the present disclosure will often have a relatively low concentration (e.g., 30 to 50% w/w), but the aqueous ammonium nitrate solution may subsequently be concentrated up to any desired level (e.g., to 80% w/w, 90% w/w or 99% w/w) by evaporation. Concentration of the aqueous ammonium nitrate solution may also be achieved by additional evaporators in the integrated process for ammonium nitrate.

The oxidation of ammonia to NOx and concurrent oxidation reactions that lead to the formation of the nitric acid are governed by the operating pressures and temperatures appropriate to the system design and, at least in the final absorption phase, by the temperature of available coolant. Oxidation only occurs to a limited extent until post-oxidation cooling is initiated which can be at temperatures as high as 800°C. When the reaction mixture is cooled, the first liquid will form at the dew point at the operating pressure and the formation of acid will continue as the mixture is further cooled. At an operating pressure of about 15 bar (absolute pressure) condensate will typically form and, thus, formation of nitric acid will typically commence, at the corresponding saturation temperature of about 200°C. Acid formation will continue down to a temperature of about 20 to 30°C, with the final temperature depending on the temperature of the coolant used. For operation at 2 bar (absolute pressure), the formation of nitric acid typically commences at about 110°C.

The manufacturing plant according to the present disclosure can include a pump that can transport the acidic aqueous solution from the acidic start-up water-tank to the evaporator.

In the manufacturing plant according to the present disclosure, it is optional, but often desired, to let a cooler transfer heat from the NOx output to the aqueous ammonium nitrate solution. The transferred heat can then be used for evaporating water which is fed to the oxidizer as water vapour together with ammonia and oxygen. Thus, in some embodiments, the cooler is a heat exchanger fluidly connected to the oxidizer and the condenser. Suitable heat exchangers may comprise any type of heat exchanger that provides for heat transfer from a process fluid, like the NOx output, to a coolant fluid. For example a shell- and-tube type heat exchanger, a printed-circuit type heat exchanger, a plate type heat exchanger or a fin-fan type heat exchanger. Fluid flow passages within the heat exchanger desirably have a small cross- sectional dimension (e.g., less than about 3 mm and desirably less than 2 mm equivalent diameter) in order to assist heat and mass transfer and to facilitate heat exchanger compactness. Also, depending upon processing demands, a single heat exchanger may be employed or two or more heat exchangers may be connected in parallel or in series, and the expressions "a heat exchanger" and "the heat exchanger" as employed in this specification are to be understood in this context. The coolant fluid may comprise a gas, for example fan forced air, or a liquid such as water.

In the manufacturing plant according to the present disclosure, it is optional, but often desired, to include at least one valve in the connection between the acidic start-up water-tank and the oxidizer, a heat-exchanger if present, the condenser or the phase separator. As used herein, such valve is called a production output valve. Opening of the production output valve allows the output from the oxidizer, the heat-exchanger if present, the condenser or the phase separator to be fed back into the acidic start-up water-tank during start-up. Closing of the production output valve prevents the output from the oxidizer, the heat-exchanger if present, the condenser or the phase separator to be fed back into the acidic start-up water-tank after the ignition temperature of the catalyst in the oxidizer is reached.

In the manufacturing plant according to the present disclosure, it is optional, but often desired, to include at least one valve in the connection between the acidic start-up water-tank and the evaporator. As used herein, such valve allowing or preventing a fluid flow from the start-up water-tank to the evaporator is called a start-up valve. Opening of the start-up valve allows the acidic aqueous solution to reach the evaporator directly or indirectly, during start-up. Closing of the start-up valve prevents the acidic aqueous solution to reach the evaporator after the ignition temperature of the oxidizer is reached.

The figures described in more detail below are used to more specifically illustrate particular embodiments but are not meant to limit the generality of the above description.

Figure 1 shows one prior art manufacturing plant arranged to contain an integrated process for ammonium nitrate. A gaseous mixture (16) comprising ammonia, water vapour and oxygen (18) is fed to an oxidizer (19). The oxidizer (19) typically contains gauzes made of a suitable catalyst for oxidizing ammonia to NOx. An example of a commonly used catalyst is a platinum-rhodium catalyst. The NOx out-put (20) from the oxidizer (19) is then fed to a first heat exchanger (21) where the reaction mixture is cooled to a temperature above the level of dew point (e.g., to a temperature of the order of 140°C) by heat exchange with a heat transfer fluid such as water, pressurized single-phase water or oil. On exiting from the first heat exchanger (21) the cooled NOx out-put (20) is fed to a second heat exchanger (22). The second heat exchanger (22) contains channels (23) passing the NOx out-put (20) counter-current to the heat-exchanger fluid (25) in other channels (24). Nitrogen monoxide in the NOx out-put will have started to oxidize upon exit of the first heat exchanger (21). Gases that are not condensed or absorbed in the condensed liquid in the heat exchangers (21 and 22) are separated from the nitric acid, to form a tail gas (26), by a phase separator (27), leaving a gas-free nitric acid stream (13). The principal components of the tail gas (26) will be excess unreacted oxygen, argon and other impurities introduced with the oxygen feed to the process, nitrogen and nitrous oxide formed as by-products in the oxidizer, and water vapour. The tail gas exiting the phase separator (27) will also contain nitrous gases. However, the tail gas may be fed from the phase separator (27) to a further separator (27A) by way of a chiller-condenser (27B), these vessels may act to effectively provide reaction-absorption subsequent to that provided in the second heat exchanger (22). The dilute nitric acid stream (13) from the phase separator (27), at about the absorber pressure, is pumped by a pump (28) to a pressure slightly above that in a following ammonium nitrate reaction chamber (29) and ammonium nitrate evaporator (30) to allow for pressure drops through the intervening equipment. The ammonium nitrate reaction chamber (29), as illustrated, simply comprises a length of adiabatic pipe or duct in which the liquid phase of the two- phase stream, resulting from the reaction, will be only partially concentrated. The hot, pressurized nitric acid stream (13) is mixed with the gaseous ammonia feed (14), at a similar pressure, and fed to the ammonium nitrate reaction chamber (29), giving rise to the reaction stream (33), which comprises a two-phase stream consisting of ammonium nitrate solution in the liquid phase and a steam/ammonia mixture in the vapour phase. It is suitable that about 40% of this two-phase stream will be ammonium nitrate. The release of reaction heat gives rise to vaporization of water into the vapour phase and, consequently, partial concentration of the ammonium nitrate within the liquid phase. Sufficient excess of ammonia (14) is fed to the ammonium nitrate reaction chamber (29) to reach the oxidizer feed/vapour inlet (16) as vapours (17) from the aqueous ammonium nitrate solution. A demister device (36) is located within an ammonium nitrate tank (34) and is employed to assist the disengagement of liquid droplets containing ammonium nitrate from the steam. An external source (35) of wash- water is provided for spraying the demister device as and when required, for example during start-up or shut-down of the process. The aqueous ammonium nitrate solution (15) from the ammonium nitrate tank (34) is passed through a pressure let-down valve (37) by way of a cooler (38) to avoid flashing of the solution in the valve.

During start-up of a manufacturing plant arranged to contain an integrated process for ammonium nitrate as disclosed in Figure 1, an external heat source (not shown) may be employed to heat a fluid loop (A) to a suitable temperature approximating that employed in steady-state operation of the process. Water may then be introduced into the nitric acid separator 27 or a separate start-up tank (not shown) may be installed in parallel with separator 27, for example, allowing generation of water vapour in the evaporator(s) and, consequently, providing for circulation of water vapour through the oxidizer.

Figure 2 is a system according to one embodiment. In Figure 2, an acidic start-up water-tank (90) for containing an acidic aqueous solution (91) is installed between a condenser (22) and an evaporator (30). During start-up of the manufacturing plant in Figure 2, the temperature of the catalyst in oxidizer (19) is below the ignition temperature. The acidic start-up water-tank (90) can be filled with water and a pH adjusting agent such as an acid to form an acidic aqueous solution in the tank. Alternatively, the acidic start-up water-tank can be filled with an acidic aqueous solution. Inlet (85) may be used to fill the tank. The acidic aqueous solution (92) from the acidic start-up water-tank (90) enters the nitric acid production line by a pump (81) when a start-up valve (80) is in open position. The acidic aqueous solution and flows through the ammonium nitrate reaction chamber and the ammonium nitrate evaporator (30) wherein the acidic aqueous solution is evaporated by heating. The heated acidic aqueous solution thus enters the ammonium nitrate tank (34), and passes the oxidizer (19) in the form of water vapour. From the oxidizer the water vapour is passed through the heat exchanger and the condenser back to the start-up water tank via line (93). The circulation provided by the acidic start-up water-tank is indicated by dashed arrows in Figure 2.

A temperature sensor (95) is installed in the oxidizer. When the temperature threshold of the catalyst in the oxidizer (19) is reached, ammonia oxidation is initiated and it is often desired to let the NOx output (20) from the oxidizer (19) bypass the acidic start-up water-tank (90). This can for example be achieved by closing of a production output valve (82) in the connection between the acidic start-up water-tank and the condenser (22). In one embodiment the temperature sensor measures the temperature of the catalyst which may be in the form of catalyst gauzes.

Aqueous nitric acid can be injected directly into the acidic start-up water-tank (90) via pH adjusting agent inlet (85) to ensure acidic pH in the solution therein (91). The pH of the solution (91) in the acidic start-up water-tank (90) can be controlled by a pH sensor (94) which is connected to an injector (not shown) supplying aqueous nitric acid. If the sensor measures a pH outside a desired range, it can trigger injection of nitric acid via inlet (85) into the solution inside the start-up water-tank (90) in an amount sufficient to achieve a pH inside a desired range.

The composition of the gaseous mixture (16) entering the oxidizer can be different during start-up compared to during production of an aqueous ammonium nitrate solution. During start-up, the gaseous mixture (16) may initially consist primarily of water vapour and potentially some ammonia. As the temperature of the production lines rise closer to the ignition temperature of the catalyst in the oxidizer, the composition of the gaseous mixture (16) can be adjusted to comprise ammonia, water vapour and oxygen. During production of an aqueous ammonium nitrate solution, the gaseous mixture (16) will comprise water vapour, ammonia and oxygen.

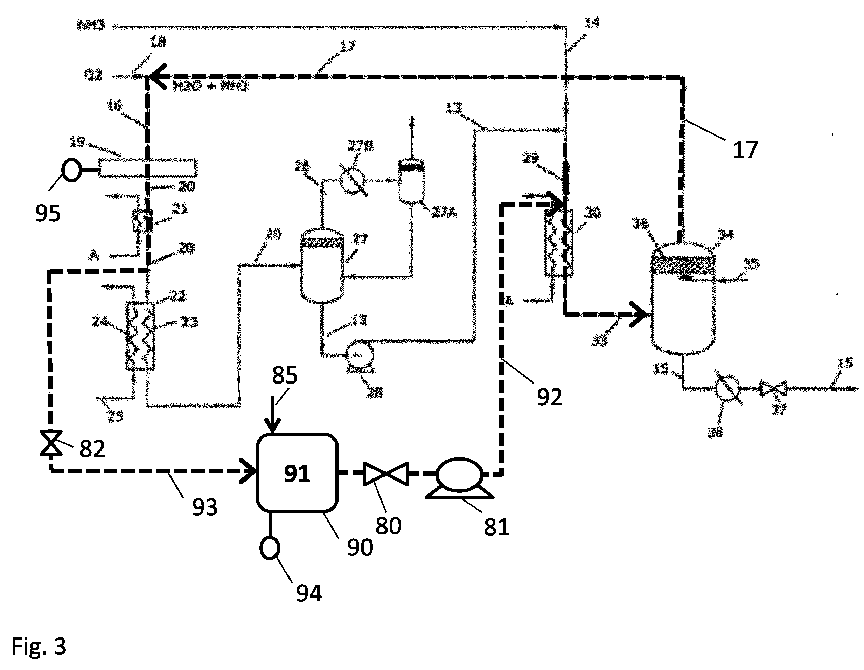

Figure 3 discloses an embodiment of a plant where the start-up circulation of acidic start-up fluid by-passes the condenser (22) and the ammonium nitrate reaction chamber (29). Accordingly the main inlet (93) of the start-up water tank is in fluid communication with the outlet of the oxidizer and the heat exchanger. The outlet (92) of the pump (81) is in direct fluid communication with the inlet to the ammonium nitrate evaporator (30).

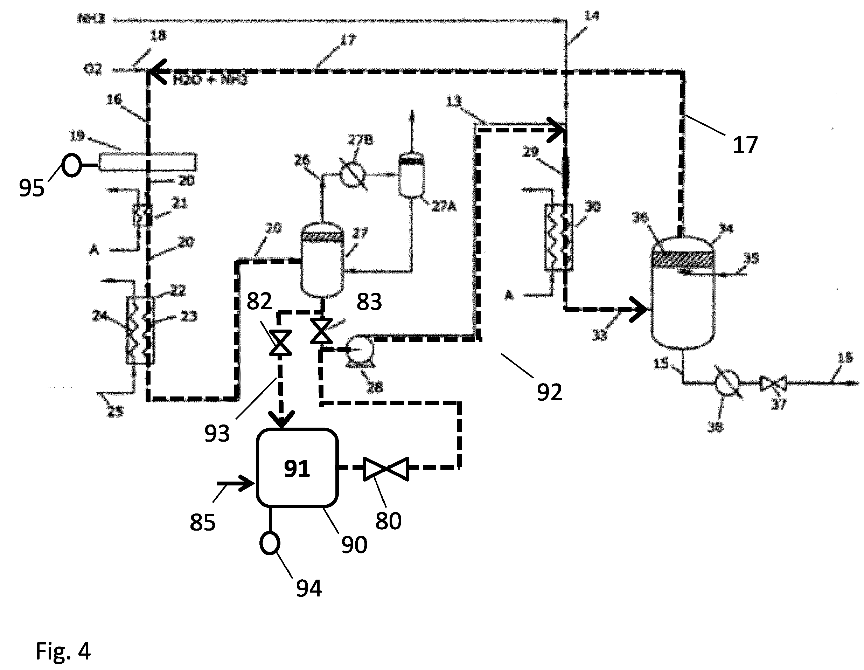

Figure 4 illustrates an embodiment where the acidic start-up fluid is introduced directly upstream of the main pump (28) so that the main pump may be used to transfer the start-up fluid (92) to the ammonium nitrate evaporator (30). The start-up fluid passes through the ammonium nitrate tank (34), the oxidizer (19), the heat exchanger, the condenser and into the phase separator (27). From there it passes via valve (82) to the start-up tank. A valve (83) is installed to close off the flow directly from the phase separator to the pump during start-up. When production is initiated valve (83) is opened and valves (82) and (80) are closed.

A person skilled in the art will appreciate that features illustrated on figures 2, 3 and 4 may be combined to provide other embodiments within the present invention.

The manufacturing plant according to the present disclosure can produce an aqueous solution of ammonium nitrate, but this is not necessarily the end product. If desired, the aqueous solution of ammonium nitrate can be dried by conventional methods to obtain a powder or particles.

## Claims

1. A manufacturing plant for producing ammonium nitrate comprising:
a) an oxidizer with a catalyst able to oxidize ammonia to nitrogen oxide comprising a vapour inlet and an outlet;
b) a condenser fluidly connected to the outlet of the oxidizer;
c) a phase separator fluidly connected to the condenser; wherein the phase separator comprises a gas outlet and a liquid outlet;
d) an ammonium nitrate reaction chamber fluidly connected to the liquid outlet of the phase separator;
e) an evaporator fluidly connected to the ammonium nitrate reaction chamber;
f) an ammonium nitrate tank for containing an aqueous ammonium nitrate solution fluidly connected to the evaporator, wherein the ammonium nitrate tank comprises a vapour outlet fluidly connected to the vapour inlet of the oxidizer; and
g) a start-up water-tank for containing an acidic aqueous fluid fluidly connected to the evaporator, wherein the start-up water tank is connected to a source of an acidic aqueous fluid or to a source of a pH adjusting agent.

2. A manufacturing plant according to claim 1, wherein the start-up water-tank contains an acidic aqueous solution.

3. A manufacturing plant according to claim 1 or 2, further comprising a heat exchanger arranged downstream of the outlet of the oxidizer and upstream of the condenser.

4. A manufacturing plant according any one of claims 1 to 3, wherein the start-up water-tank comprises an inlet directly connected to the outlet of the oxidizer, an outlet of the heat exchanger if present, an outlet of the condenser, the liquid outlet of the phase separator, or an outlet of the ammonium nitrate reaction chamber and the start-up water-tank comprises an outlet fluidly connected to an inlet to the evaporator.

5. A manufacturing plant according any one of claims 1 to 4, wherein an inlet to the start-up water-tank is directly connected to the outlet of the condenser and an outlet of the start-up water-tank is connected to an inlet to the ammonium nitrate reaction chamber.

6. A manufacturing plant according any one of claims 1 to 4, wherein an inlet to the start-up water-tank is directly connected to the outlet of the condenser and the outlet of the start-up water-tank is connected to an inlet to the evaporator.

7. A manufacturing plant according any one of claims 1 to 6, further comprising a pump arranged downstream of the start-up water-tank and upstream of the evaporator, wherein the pump is able to transport the acidic aqueous fluid from the start-up water-tank to the evaporator.

8. A manufacturing plant according any one of claims 1 to 7, wherein the start-up water-tank for containing an acidic aqueous fluid is configured to establish a circulation of acidic aqueous fluid through the evaporator, the ammonium nitrate tank and the oxidizer.

9. A manufacturing plant according to any one of claims 1 to 8, further comprising at least one production output valve upstream the acidic start-up water-tank and downstream the oxidizer, a heat-exchanger if present, the condenser or the phase separator, wherein the production output valve allows a fluid connection between the oxidizer, the heat-exchanger if present, the condenser or the phase separator and the acidic start-up water-tank when in open position and which prevents the fluid connection when in closed position.

10. A manufacturing plant according to any one of claims 1 to 9, further comprising at least one start-up valve in the fluid connection between the start-up water-tank and the ammonium nitrate reaction chamber or the evaporator, wherein the start-up valve allows a fluid connection between the start-up water-tank and the ammonium nitrate reaction chamber or the evaporator when in open position and which prevents the fluid connection when in closed position.

11. A manufacturing plant according to any one of claims 1 to 10, wherein the oxidizer comprises a temperature sensor for measuring the temperature inside the oxidizer.

12. A manufacturing plant according to any one of claim 2 to 11, wherein the pH of acidic aqueous fluid in the start-up water-tank is below 3.0 as measured at standard conditions.

13. A manufacturing plant according to any one of claim 2 to 12, wherein the acidic aqueous solution in the start-up water-tank is nitric acid.

14. A manufacturing plant according to any one of claim 1 to 13, wherein the start-up water-tank further comprises a pH sensor in contact with the acidic aqueous fluid.

15. A process for start-up of a manufacturing plant according to claim 1 comprising the steps
a) pumping acidic aqueous fluid from the start-up water-tank to the evaporator,
b) heating the acidic aqueous fluid in the evaporator to generate water vapour;
c) providing the water vapour to the ammonium nitrate tank;
d) feeding vapour from the ammonium nitrate tank to the oxidizer
e) feeding the output of the oxidizer directly or indirectly into the start-up water-tank,
f) continuing steps a) to e) until a preselected temperature in the oxidizer is reached.

16. A process according to claim 15, wherein the manufacturing plant further comprises at least one production output valve upstream the start-up water-tank and downstream the oxidizer, a heat-exchanger if present, the condenser or the phase separator, wherein the pumping step a) is followed by opening of the production output valve whereby the output from the oxidizer, the heat-exchanger if present, the condenser or the phase separator is fed back into the start-up water-tank.

17. A process according to any one of claim 15 to 16, wherein the manufacturing plant further comprises at least one start-up valve in the fluid connection between the start-up water-tank and the ammonium nitrate reaction chamber or the evaporator, wherein the pumping step a) is subsequent to opening of the start-up valve which allows the acidic aqueous fluid to be fed from the start-up water-tank to the evaporator.

18. A process according to any one of claim 16 to 17, further comprising measuring the temperature in the oxidizer and closing of the production output valve after the preselected temperature in the oxidizer is reached.

19. A process according to claim any one of claims 17 to 18, further comprising closing of the start-up valve after the preselected temperature in the oxidizer is reached.

20. A process according to claim any one of claims 15 to 19, wherein the preselected temperature is about the ignition temperature of the catalyst in the oxidizer.

21. A process according to anyone of claims 15 to 20, wherein the heating step b) provides the vapour fed to the oxidizer in step c) with a temperature above the dew point for steam in the oxidizer.

22. A process according to any one of claims 15 to 21, further comprising measuring the temperature in the oxidizer, preferably the temperature of the catalyst.

23. A process according to any one of claims 15 to 22, wherein the vapour from the aqueous ammonium nitrate tank entering the oxidizer is substantially water vapour.

24. A process according to any one of claims 15 to 23, wherein the vapour from the aqueous ammonium nitrate tank entering the oxidizer is substantially water vapour and ammonia.

25. A process according to any one of claims 15 to 24, wherein the process further comprises measuring the pH of the acidic aqueous fluid in the start-up water-tank and adding a pH adjusting agent if the pH is above a preset value.

26. A process according to any one of claims 15 to 25, wherein the acidic aqueous fluid in the start-up water-tank is nitric acid.

27. A process according to claim 25, wherein the preset value is 3.0 and the pH adjusting agent is nitric acid.
